Europäisches Patentamt

European Patent Office

Office européen des brevets

(19)

(11) Numéro de publication: **0 009 456**
**B1**

(12) **FASCICULE DE BREVET EUROPEEN**

(45) Date de publication du fascicule du brevet:
17.08.83

(51) Int. Cl.³: **F 28 C 3/16,** B 01 J 8/34,
B 01 J 8/04

(21) Numéro de dépôt: 79400671.8

(22) Date de dépôt: 21.09.79

(54) **Dispositif d'échange thermique entre des particules solides et un courant gazeux.**

(30) Priorité: 21.09.78 FR 7827054

(43) Date de publication de la demande:
02.04.80 Bulletin 80/7

(45) Mention de la délivrance du brevet:
17.08.83 Bulletin 83/33

(84) Etats contractants désignés:
AT BE CH DE FR GB IT LU NL SE

(56) Documents cités:
DE-A-1 767 972
FR-A-1 187 105
FR-A-1 469 109
FR-A-2 066 178
GB-A-676 613
GB-A-781 994
US-A-2 774 661
AUFBEREITUNGS-TECHNIK, vol. 15, (1974) no.
12, pages 665—669 K. ROEBEN et al.: »Praktische
Anwendungen von Mehrstufen-Rieselboden-Wirbelschichtapparaten«

(73) Titulaire: **SAINT-GOBAIN INDUSTRIES, 62, Bd Victor
Hugo, F-92209 Neuilly sur Seine (FR)**

(72) Inventeur: **Meunier, Georges, 20 Rue des Moulins,
F-49640 Morannes (FR)**

(74) Mandataire: **Eudes, Marcel et al, Saint-Gobain
Recherche 39 Quai Lucien Lefranc, F-93304 Aubervilliers
Cedex (FR)**

**0 009 456**

## Dispositif d'échange thermique entre des particules solides et un courant gazeux

La présente invention concerne un dispositif pour échange thermique par mise en contact direct entre des particules solides s'écoulant par gravité et un courant gazeux ascendant dans une colonne à garnissage.

La mise en contact de particules solides et d'un courant gazeux est une opération industrielle utilisée couramment pour effectuer une modification physique ou chimique des particules ou du courant gazeux. On peut citer, par exemple, les opérations de séchage, d'échange thermique, d'oxydation catalytique.

A cet effet, il est connu par exemple de faire circuler à contrecourant, dans un échangeur à colonne sans garnissage, un courant gazeux et des particules solides. Le rendement de cette installation est généralement faible, ce qui conduit, pour une efficacité satisfaisante, à utiliser des échangeurs très volumineux.

On a utilisé également des lits fluidisés très avantageux pour les réactions catalytiques, mais qui sont moins intéressants pour les échanges thermiques, car la température des particules solides et du courant gazeux se stabilise dans le lit à un niveau intermédiaire entre les températures initiales des deux phases considérées et les échanges cessent dès que cette température du lit est atteinte. Aussi, pour épuiser la chaleur contenue dans un gaz en la transférant dans des particules solides, est-il connu de faire appel à une cascade de lits fluidisés entraînant des pertes de charges très importantes, souvent incompatibles avec les pressions de gaz disponibles.

On a proposé dans le brevet français FR-A-978 287 de faire circuler dans une colonne à garnissage des particules solides s'écoulant par gravité et un courant gazeux ascendant.

Le régime obtenu dans cette forme de réalisation est un état fluidifié des particules solides entre les éléments de garnissage, constitué par exemple par des anneaux de Raschig.

Ce procédé a trouvé en particulier une application dans un procédé et un dispositif pour le préchauffage de sable destiné, par une réaction avec de la soude caustique, conduite à une température comprise entre 320 et 450° C, à la production d'un produit intermédiaire avantageusement utilisé, notamment, dans la fabrication du verre, ainsi qu'il est décrit dans le brevet français FR-A-1 469 109.

Selon ce dernier, quel que soit le mode de mise en œuvre du procédé d'élaboration de ce produit intermédiaire, qu'il utilise comme matière première de la soude caustique solide à la température ambiante, ou de la soude fondue, de la lessive de soude froide, ou chaude, peu ou très concentrée, etc..., il est avantageux d'apporter le plus possible des calories nécessaires pour atteindre la température appropriée du milieu réactionnel, par l'intermédiaire du sable préchauffé.

Le préchauffage du sable, selon le brevet français précité, est obtenu dans une colonne comportant une ou plusieurs grilles supportant des éléments de garnissage, à sa partie supérieure, et un foyer muni de brûleurs, à sa partie inférieure, le sable s'écoulant par gravité du haut vers le bas de la colonne, à la rencontre des gaz chauds ascendants émis par les brûleurs.

Or un tel dispositif ne permet guère, en pratique, de porter le sable que jusque vers 750 à 800° C, température qu'il peut être souhaitable de dépasser, dès lors que la soude disponible se présente sous forme de lessive, pour éviter d'avoir à prévoir des moyens complémentaires d'apport de calories au milieu réactionnel.

On constate en effet que, dans un tel dispositif, l'utilisation de températures plus élevées provoque fréquemment un frittage de certaines particules de sable, susceptibles d'entraîner un colmatage des éléments de garnissage.

On sait par ailleurs que l'utilisation de telles températures imposerait l'emploi de matériaux spéciaux pour la confection des divers éléments de la colonne qui y seraient soumis, ces matériaux devant présenter, à la fois, de bonnes performances mécaniques (absence de fluage), et chimiques (absence d'oxydation).

Enfin, le flux des particules préchauffées par un tel dispositif n'est pas toujours très homogène quant à sa température et à sa vitesse.

La présente invention vise à remédier à ces inconvénients.

A cet effet, la présente invention a pour objet un dispositif pour échange thermique par mise en contact direct entre des particules solides et un gaz comportant une colonne creuse disposée verticalement et comprenant dans sa partie supérieure au moins un étage constitué d'un empilement d'éléments de garnissage, au travers desquels les particules solides s'écoulent vers le bas par gravité à la rencontre d'un courant gazeux ascendant, caractérisé en ce que ladite colonne comprend dans sa partie inférieure une grille horizontale adaptée pour supporter un lit fluidisé desdites particules solides, en l'alimentant, au moins en partie, par ledit courant gazeux, ladite grille étant disposée sensiblement à la verticale de l'étage d'éléments de garnissage, et le lit fluidisé recevant directement les particules s'écoulant dudit étage.

La présence du lit fluidisé permet d'améliorer le fonctionnement de l'échangeur à garnissage. On y obtient en effet un écoulement parallèle et homogène en température et en vitesse du courant gazeux. On obtient par ailleurs une homogénéisation des particules solides en température.

Le dispositif selon l'invention permet en outre, lorsqu'il est utilisé pour réchauffer des particules solides, d'amener des particules, notamment des particules de sable, à des températures pouvant atteindre 1200°C, ce qui était impossible en utilisant le dispositif du brevet français FR-A-1 469 109. De plus, contrairement à ce que l'on pouvait attendre, ces températures de l'ordre de 1200°C dans le fit fluidisé n'entraînent pas des températures trop élevées dans les étages d'éléments de garnissage, même dans l'étage le plus bas où la température des particules solides ne dépasse pas 800°C.

Par l'utilisation du dispositif selon la présente invention, pas plus dans les étages d'éléments de garnissage que dans le lit fluidisé lui-même, on n'observe de frittage des particules de sable. Par ailleurs il n'est pas nécessaire d'utiliser pour la construction des étages de matériaux spéciaux résistant aux très hautes températures.

Par rapport à un simple lit fluidisé, un tel dispositif présente l'avantage d'une récupération bien plus grande de chaleur. En effet, avec un simple lit fluidisé, la chaleur du courant gazeux quittant le lit fluidisé est totalement perdue. Au contraire, dans la présente invention, cette chaleur est, au moins partiellement, récupérée dans les étages d'éléments de garnissage qui sont disposés au-dessus du lit fluidisé. On peut multiplier le nombre d'étages jusqu'à atteindre le point de rosée du courant gazeux.

Dans un mode de réalisation particulier de la présente invention, destiné au réchauffage de particules solides, le dispositif est alimenté par de l'air et il comporte au moins un brûleur disposé au-dessus de la grille de fluidisation et destiné à injecter une substance combustible au sein du lit fluidisé. Il comporte alors avantageusement un brûleur de préchauffage sur le courant d'alimentation en air, dont le fonctionnement permet de réchauffer ledit courant et d'assurer l'inflammation du combustible injecté directement dans le fit fluidisé, tant que ce dernier n'a pas atteint une température de l'ordre de 600°C au moins.

On règle alors avantageusement les quantités de combustible injectées par rapport à la quantité d'air, de façon à avoir un excès d'air de 5 à 10%.

D'autres éléments, buts et avantages de la présente invention apparaîtront à la lecture de la description qui va suivre, faite au regard des dessins annexés.

Sur ces dessins:

la Fig. 1 représente une section d'un dispositif selon la présente invention pour le réchauffage de particules solides;

la Fig. 2 représente une section d'un dispositif pour le traitement de sable de fonderie.

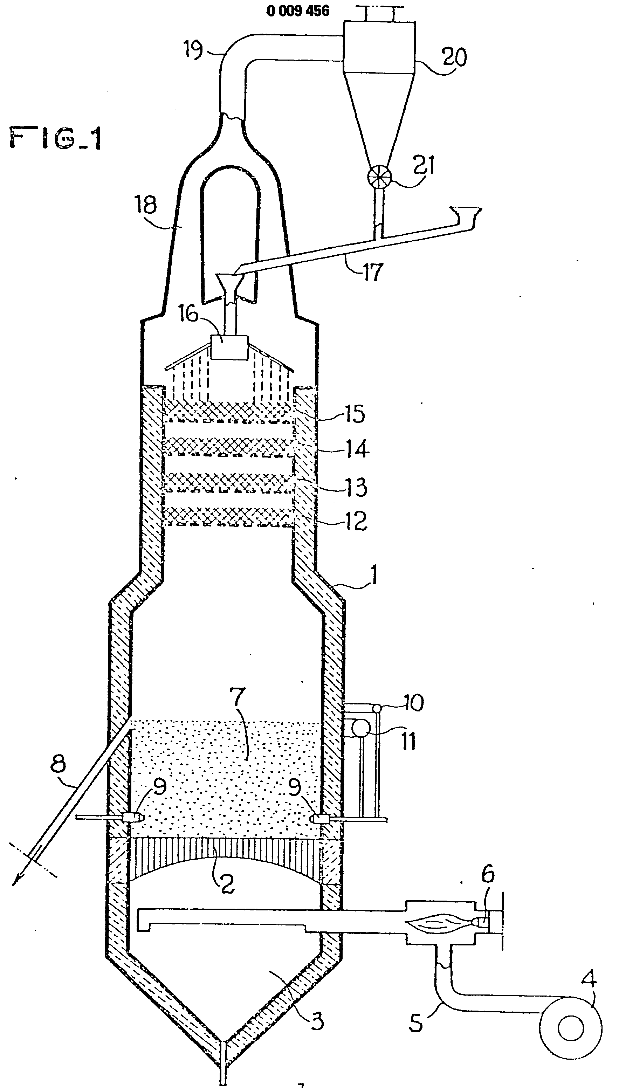

Le dispositif représenté sur la Fig. 1 comprend une colonne cylindrique 1 garnie intérieurement de briques réfractaires. La colonne 1 comporte une partie supérieure et une partie inférieure, le diamètre de la partie inférieure étant d'environ 1/3 plus élevé que celui de la partie supérieure et ces deux parties étant raccordées par une zone tronconique. La partie inférieure de la colonne 1 comprend une grille de fluidisation 2 au-dessous de laquelle se trouve une boîte à vent 3 alimentée par un compresseur d'air 4, par l'intermédiaire d'une canalisation 5 sur laquelle est disposé un brûleur de préchauffage 6 alimenté en fuel domestique.

La grille 2 supporte un lit 7 de particules fluidisées dont l'excédent est évacué par un trop-plein latéral 8.

Au sein du lit fluidisé 7 sont disposés des brûleurs 9 alimentés en fuel et en air de balayage par deux conduits de distribution 10 et 11.

La partie supérieure de la colonne 1 comprend quatre étages, respectivement 12, 13, 14 et 15, qui sont constitués chacun d'un caillebotis à grandes mailles (60 × 20 mm) formé de lames d'acier réfractaire sur chant de 15 × 1 mm soudées par points, ayant une ouverture de 93%, supportant un garnissage constitué d'anneaux Pall également en acier réfractaire de 25 × 25 mm. Chaque étage est séparé du suivant par un espace vide représentant 1 à 2 fois l'épaisseur du garnissage.

Un distributeur rotatif 16 de particules solides distribue des particules sur toute la surface dè l'étage 15 qui est le plus élevé. Les particules sont amenées dans le distributeur 16 par un conduit 17.

La colonne comporte à sa partie supérieure une cheminée 18 d'évacuation du courant gazeux débouchant sur une canalisation 19.

Un cyclone 20 reçoit par la canalisation 19 le courant gazeux évacué et sépare les particules fines qui peuvent être entraînées. Ces particules séparées par le cyclone 20 sont réinjectées dans la canalisation 17 par l'intermédiaire d'un obturateur rotatif 21.

A titre d'exemple, on fait fonctionner un dispositif de ce type comprenant une colonne d'un diamètre de 1,45 m, comportant quatre étages dans lesquels les épaisseurs d'éléments de garnissage sont de 15 cm, en utilisant comme particules du sable d'un diamètre moyen de 200 microns. Chaque étage est séparé du suivant par un espace vide de 20 cm.

Le débit de sable est de 3250 kg/h. La température d'entrée du sable à la partie supérieure de la colonne est de 25°C.

Le débit d'air de fluidisation ramené aux conditions normales est de 1450 m³/h, le débit d'air des injecteurs du fuel et des regards de 200 m³/h, le débit de fuel de 113,5 kg/h, le débit des fumées de 1715 m³/h.

La température d'entrée de l'air est de 40°C. La température du lit fluidisé 7 est de 1200°C. La température du courant gazeux, juste sous l'étage inférieur, est de 960°C. La température de sortie du courant gazeux est de 165°C.

3

La température du sable à la sortie de l'étage inférieur est de 634°C. La température de sortie au niveau du trop-plein 8 du lit fluidisé 7 est de 1120°C.

Le bilan thermique de l'installation s'établit comme suit:

Entrée
Air à 40°C:   $0,31 \times 40 \times 1650 \times 1,16 \cdot 10^{-3} =$   24
Sable à 25°C:   $0,18 \times 25 \times 3250 \times 1,16 \cdot 10^{-3} =$   17
Fuel:   $9920 \times 113,56 \times 1,16 \cdot 10^{-3} =$   1308
Total:   1349 kW

Sortie
Fumées à 165°C:   $0,338 \times 165 \times 1715 \times 1,16 \cdot 10^{-3} =$   112
Sable à 1120°C:   $0,28 \times 1120 \times 3250 \times 1,16 \cdot 10^{-3} =$   1183
Total:   1295 kW

Les pertes sont donc de 54 kW, soit 4%.
Les pertes totales y compris les fumées sont:

$$54 + 112 = 166 \text{ kW, soit } 13\%.$$

Ce bilan montre que, par rapport à un lit fluidisé seul, le dispositif selon l'invention permet d'économiser une quantité importante d'énergie. En effet, lors de l'écoulement du sable dans les éléments de garnissage, le sable a atteint environ la moitié de sa température finale. S'il n'y avait que le lit fluidisé, il serait donc nécessaire de préchauffer le sable et donc de dépenser au total une quantité d'énergie sensiblement double de celle qui est consommée dans le dispositif selon l'invention.

Si, au contraire, on avait fait fonctionner le dispositif dans les mêmes conditions mais sans utiliser de lit fluidisé à la partie inférieure de la colonne, on aurait obtenu sous l'étage inférieur une température de 1500°C, à laquelle résisteraient mal les matériaux constituant normalement le support du garnissage.

Le dispositif selon l'invention peut être utilisé non seulement pour réchauffer des particules solides, mais également pour récupérer de la chaleur de particules solides chaudes.

Comme exemples de récupération de chaleur on peut citer la récupération de chaleur des sables de fonderies ou de schistes bitumineux dont on fait brûler les constituants combustibles.

Pour effectuer le traitement de particules solides comprenant des substances combustibles, on peut en outre avantageusement utiliser un dispositif tel que défini ci-dessus, dans lequel on introduit au sommet les particules solides et à l'intérieur duquel les substances combustibles brûlent. Ce dispositif peut être combiné avec un deuxième dispositif constitué par une colonne comportant au moins un étage constitué d'un empilement d'éléments de garnissage, de telle façon que les particules solides chaudes sortant du lit fluidisé du premier dispositif soient introduites dans le deuxième dispositif, au-dessus des éléments de garnissage, et que le deuxième dispositif soit alimenté par un courant d'air froid qui se réchauffe au sein du deuxième dispositif et est introduit dans le premier dispositif. Le deuxième dispositif peut en outre comporter avantageusement, à sa partie inférieure, un lit fluidisé et donc être du même type que le premier dispositif.

Une telle combinaison permet de récupérer la chaleur sensible des particules solides et du courant gazeux.

Elle permet en outre une certaine inertie de fonctionnement grâce au »volant« de particules solides dans le lit fluidisé dans le premier dispositif, compensant ainsi d'éventuelles irrégularités de fonctionnement des colonnes à garnissage. Le temps de séjour dans ce lit fluidisé peut d'ailleurs être modifié par réglage du débit du courant gazeux. Cette combinaison permet également un fonctionnement à la température optimale par injection, si nécessaire, de combustible dans le premier dispositif.

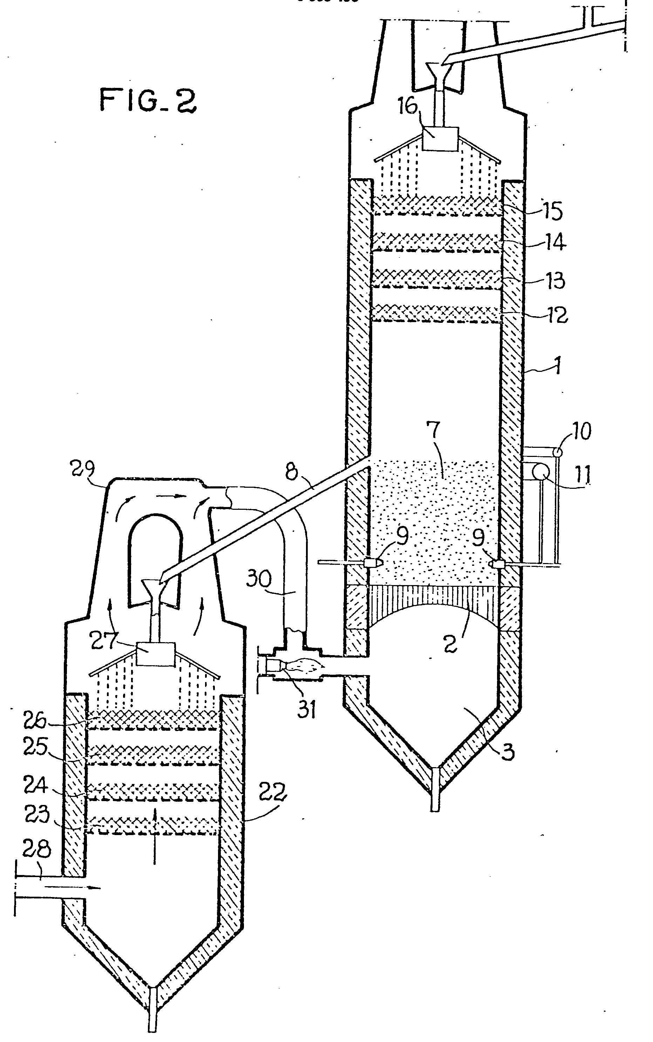

On a représenté sur la Fig. 2 un tel dispositif destiné au traitement des sables de fonderie qui contiennent un liant polymère combustible à éliminer.

Ce dispositif comprend une première colonne du même type que celle représentée sur la Fig. 1 maisalimentée non pas par de l'air dans lequel on fait brûler du fuel, mais par de l'air provenant d'une deuxième colonne combinée à la première. Les parties de la première colonne identiques à celles de la Fig. 1 portent les mêmes références.

La deuxième colonne 22 compte quatre étages 23, 24, 25 et 26 du même type que les étages 12 à 15. Au-dessus de l'étage supérieur 26 est disposé un distributeur rotatif 27 de particules provenant du conduit 8 servant de trop-plein au lit fluidisé 7 de la première colonne.

Cette deuxième colonne 22 comporte à sa partie inférieure une entrée d'air 28 et à sa partie supérieure une cheminée 29 d'évacuation du courant gazeux. Cette cheminée débouche dans un conduit 30 qui relie la cheminée 29 à la boîte à vent 3 de la première colonne. Le conduit 30 est muni d'un brûleur de réchauffage 31.

4

Le fonctionnement de ce dispositif est le suivant.

On alimente la première colonne avec du sable de fonderie contenant des liants combustibles. On fait brûler ces substances combustibles dans la première colonne 1 où l'on forme un lit fluidisé 7 de particules de sable chaudes. Ces particules chaudes sont déversées par le conduit 8 dans la colonne 22 où elles traversent les plateaux à garnissage. On introduit par l'entrée 28 un courant d'air froid qui se réchauffe en s'écoulant à contre-courant des particules chaudes qui se refroidissent progressivement. Le courant d'air ainsi réchauffé est introduit par le conduit 30 dans la colonne 1 où il est utilisé comme air chaud de combustion. Si la température de cet air n'est pas suffisante pour amorcer la combustion, on fait fonctionner le brûleur 31 pour assurer l'inflammation dans la colonne 1. Pour compenser un déficit d'énergie, on peut en outre injecter dans le lit fluidisé 7 du fuel par les brûleurs 9. On peut ainsi économiser une quantité notable d'énergie tout en ayant un fonctionnement régulier.

**Revendications**

1. Dispositif pour échange thermique par mise en contact direct entre des particules solides et un gaz comportant une colonne creuse (1) disposée verticalement et comprenant dans sa partie supérieure au móins un étage (12) constitué d'un empilement d'éléments de garnissage, au travers desquels les particules solides s'écoulent vers le bas par gravité à la rencontre d'un courant gazeux ascendant, caractérisé en ce que ladite colonne (1) comprend dans sa partie inférieure une grille horizontale (2), adaptée pour supporter un lit fluidisé desdites particules solides en l'alimentant, au moins en partie, par ledit courant gazeux, ladite grille (2) étant disposée sensiblement à la verticale de l'étage (12) d'éléments de garnissage et le lit fluidisé recevant directement les particules s'écoulant dudit étage (12).

2. Dispositif selon la revendication 1, caractérisé en ce que la colonne (1) est de forme générale cylindrique, et que sa partie inférieure, au niveau du lit fluidisé (7), présente une section supérieure à celle de sa partie supérieure, au niveau de la base de l'étage inférieur (12) d'éléments de garnissage, ces deux parties étant raccordées par une zone tronconique.

3. Dispositif selon l'une des revendications 1 et 2, destiné au réchauffage de particules solides, caractérisé en ce qu'il est alimenté par de l'air et qu'il comporte en outre au moins un brûleur (9) disposé au-dessus de la grille (2) de fluidisation et destiné à injecter une substance combustible au sein du lit fluidisé.

4. Dispositif selon la revendication 3, caractérisé en ce qu'il comporte en outre un brûleur de préchauffage (6) sur le circuit d'alimentation en air.

5. Dispositif pour le traitement de particules solides comprenant des substances combustibles, caractérisé en ce qu'il comprend une première colonne (1) d'échange thermique telle que définie par l'une quelconque des revendications 1 à 4, en haut de laquelle on ontroduit lesdites particules solides et à l'intérieur de laquelle les substances combustibles brûlent, cette prémière colonne (1) étant combinée avec une deuxième colonne (22), comportant au moins un étage (23) comprenant un empilement d'éléments de garnissage, alimentée à sa partie supérieure en particules solides chaudes sortant du lit fluidisé (7) de la première colonne (1) par l'intermédiaire d'un distributeur rotatif (27), et à sa partie inférieure en un courant gazeux constitué d'air froid qui se réchauffe au sein de ladite deuxième colonne (22) avant d'être introduit dans la première colonne (1).

6. Dispositif selon la revendication 5, caractérisé en ce que la deuxième colonne comporte également à sa partie inférieure un lit fluidisé.

**Patentansprüche**

1. Vorrichtung zum Wärmeaustausch durch unmittelbaren Kontakt zwischen Festkörperteilchen und einem Gas mit einer vertikal angeordneten Hohlkolonne (1), die in ihrem oberen Teil wenigstens einen Boden (12) aus Füllkörperelementen aufweist, durch welche sich die Festkörperteilchen durch ihre Schwere im Gegenstrom zu einem aufsteigenden Gasstrom bewegen, dadurch gekennzeichnet, daß die Kolonne (1) in ihrem unteren Teil einen horizontalen Rost (2) zur Aufnahme eines Schwebebettes aus den Festkörperteilchen aufweist, das wenigstens teilweise durch den Gasstrom unterhalten wird, wobei der Rost (2) im wesentlichen vertikal unter dem Boden (12) aus den Füllkörperelementen angeordnet ist und das Schwebebett unmittelbar die aus dem Boden (12) kommenden Teilchen aufnimmt.

2. Vorrichtung nach Anspruch 1, dadurch gekennzeichnet, daß die Kolonne (1) von im allgemeinen zylindrischer Form ist und ihr unterer Teil in Höhe des Schwebebettes (7) einen Querschnitt aufweist, der größer als derjenige ihres oberen Teiles in Höhe der Basis des unteren Bodens (12) aus den Füllkörperelementen ist, wobei die beiden Teile durch eine kegelstumpfförmige Zone miteinander verbunden sind.

3. Vorrichtung nach Anspruch 1 und 2 zum Vor- oder Aufwärmen von Festkörperteilchen, dadurch gekennzeichnet, daß sie mit Luft gespeist ist und außerdem über dem Schwebebettrost wenigstens einen Brenner (9) aufweist, der zum Einspeisen einer verbrennbaren Substanz ins Innere des Schwebebettes dient.

4. Vorrichtung nach Anspruch 3, dadurch gekennzeichnet, daß sie außerdem einen Vorheizbrenner (6) im Luftversorgungskreis aufweist.

5. Vorrichtung zur Behandlung von verbrennbare Substanzen enthaltenden Feststoffteilchen, dadurch gekennzeichnet, daß sie eine erste Wärmeaustauscherkolonne (1) nach einem oder mehreren der Ansprüche 1 bis 4 aufweist, in deren oberen Teil die Festkörperteilchen eingeführt werden und in deren Innerem die verbrennbaren Substanzen brennen, wobei diese erste Kolonne (1) mit einer zweiten Kolonne (22) kombiniert ist, die wenigstens einen Boden (23) aus einem Bett aus Füllkörperelementen aufweist und in ihrem oberen Teil mit warmen Festkörperteilchen gespeist wird, die das Schwebebett (7) der ersten Kolonne (1) über einen rotierenden Verteiler (27) verlassen, während in ihrem unteren Teil ein Gasstrom aus kalter Luft eingespeist wird, der sich im Inneren der zweiten Kolonne (22) erwärmt, bevor er in die erste Kolonne (1) eintritt.

6. Vorrichtung nach Anspruch 5, dadurch gekennzeichnet, daß die zweite Kolonne in ihrem unteren Teil ebenfalls ein Schwebebett enthält.

## Claims

1. Device for heat exchange by direct contact between solid particles and a gas comprising a hollow column (1) arranged vertically and comprising in its upper part at least one stage (12) formed of a stack of packing elements, through which the solid particles flow downwardly by gravity in contact with an ascending gas stream, characterised in that said column (1) comprises in its lower part a horizontal grid (2) adapted to support a fluidised bed of said solid particles, the bed being fed at least in part by said gas stream, said grid (2) being arranged substantially in the vertical line of the stage (12) of packing elements and the fluidised bed directly receiving the particles flowing from said stage (12).

2. Device according to claim 1, characterised in that the column (1) is of generally cylindrical shape and in that its lower part, at the level of the fluidised bed (7), has a cross-section greater than that of the upper part, at the level of the base of the lower stage (12) of packing elements, these two parts being connected by a truncated zone.

3. Device according to one of claims 1 and 2, intended for heating of solid particles, characterised in that it is fed with air and in that it further comprises at least one burner (9) arranged above the fluidisation grid (2) intended to inject a combustible substance into the body of the fluidised bed.

4. Device according to claim 3, characterised in that it further comprises a preheating burner (6) in the circuit for feed of air.

5. Device for treatment of solid particles comprising combustible substances, characterised in that it comprises a first column (1) for heat exchange as defined by any one of claims 1 to 4, at the top of which said solid particles are introduced and inside which the combustible substances burn, this first column (1) being combined with a second column (22) comprising at least one stage (23) comprising a stack of packing elements, fed at its upper part with hot solid particles leaving the fluidised bed (7) of the first column (1) by means of a rotary distributor (27), and at its lower part with a gas stream constituted of cold air which is heated in the body of said second column (22) before being introduced into the first column (1).

6. Device according to claim 5, characterised in that the second column also comprises a fluidised bed at its lower part.

FIG_1

0 009 456

# FIG_2